## Europäisches Patentamt
## European Patent Office
## Office européen des brevets

(19)

(11) Veröffentlichungsnummer: **0 180 789**
**B1**

(12) EUROPÄISCHE PATENTSCHRIFT

(45) Veröffentlichungstag der Patentschrifft: 28.02.90

(21) Anmeldenummer: 85112701.9

(22) Anmeldetag: 08.10.85

(51) Int. Cl. ⁵ : **C 08 F 257/02, C 08 J 9/00**

(54) Vernetzung von Styrolpolymeren.

(30) Priorität: 08.10.84 DE 3436877

(43) Veröffentlichungstag der Anmeldung:
14.05.86 Patentblatt 86/20

(45) Bekanntmachung des Hinweises auf die Patenterteilung:
28.02.90 Patentblatt 90/09

(84) Bennante Vertragsstaaten:
DE FR GB IT NL

(56) Entgegenhaltungen:
FR-A-1 186 743
FR-A-1 259 094
US-A-2 958 672

CHEMICAL ABSTRACTS, Band 87, Nr. 10, 5. September 1977, Seite 32, Nr. 69102y, Columbus, Ohio, US; & JP - A - 77 47 090

CHEMICAL ABSTRACTS, Band 100, nr. 16, April 1984, Seite 45, Nr. 122249s, Columbus, Ohio, US; & JP - A - 58 208 309

(73) Patentinhaber: **Luperox GmbH**
**Denzinger Strasse 7**
**D-8870 Günzburg (DE)**

(72) Erfinder: **Rauer, Kurt, Dr.**
**Immelmannstrasse 8**
**D-8870 Günzburg (DE)**
Erfinder: **Ziegler, Angelika**
**Schlossstrasse 2**
**D-8871 Harthausen (DE)**

(74) Vertreter: **Abitz, Walter, Dr.-Ing.**
**Abitz, Morf, Gritschneder, Freiherr von Wittgenstein**
**Postfach 86 01 09**
**D-8000 München 86 (DE)**

LIBERGRAF, STOCKHOLM 1990

EP 0 180 789 B1

## Beschreibung

Die Erfindung betrifft ein Verfahren zum Vernetzen und gegebenenfalls Verschäumen von gegebenenfalls kernsubstituierten Polystyrolen, ihren Copolymeren untereinander, von schlagfesten Polystyrolen oder von Mischungen dieser Polymeren untereinander, ausgenommen von p-Methylstyrol-Homopolymeren.

Die europäische Patentschrift 0 013 073 offenbart die Vernetzung von p-Methylstyrol-Homopolymeren oder -Copolymeren mittels ionisierender Strahlung (z. B. Elektronenstrahlen) in Kombination mit polyungesättigten Monomeren (z. B. Divinylbenzol, Trimethylolpropantriacrylat, Allylmethacrylat, Trimethylolpropantrimethacrylat, Ethylenglycoldimethacrylat). Im einzigen Beispiel dieser Patentschrift wird Poly-(p-methylstyrol), das 5 % Trimethylolpropantrimethacrylat enthält, mit Elektronenstrahlen der Dosis 2 bis 22 MRad bei Raumtemperatur bestrahlt; die Dosis 22 MRad bewirkte eine 70 %ige Vernetzung des Poly-(p-methylstyrols). In diesem Beispiel wird unter den gleichen Bedingungen auch Polystyrol zu vernetzen versucht, aber dabei keine Vernetzung erzielt (Vernetzungsgrad: 0 %).

In der europäischen Patentveröffentlichung 0 047 050 wird die Vernetzung von Poly-(p-methylstyrol) mittels ionisierender Strahlung (z. B. Elektronenstrahlen) in Kombination mit Triallylcyanurat oder Triallylisocyanurat bei Raumtemperatur beschrieben, wobei Vernetzungsgrade bis zu 100 % erzielt werden.

Aus der US-PS-2 958 672 ist es bekannt, hochmolekulare Polymeren mit Monomaleinimiden, Bismaleinimiden oder Triacryloyl-hexahydrotriazinen (als Vernetzungsverstärkern) und Peroxiden zu vernetzen. Die meisten in dieser Entgegenhaltung genannten Kombinationen von Peroxiden und Vernetzungsverstärkern (ausgenommen die Bis-Maleinimide) sind ungeeignet zur Vernetzung von Polystyrol. Die einzige konkrete und brauchbare Angabe über die Vernetzung von Polystyrol wird in Beispiel 12 gemacht, in dem Polystyrol mit einer Kombination aus 4 % m-Phenylenbismaleinimid und 2 % Dicumylperoxid vernetzt wird.

In der FR-PS-1 186 743 ist die Vernetzung des Elastomeren einer schlagfesten Mischung aus Elastomeren und Polystyrol beschrieben (vgl. S. 1, Sp. 2, Z. 27 und 28; S. 2, Sp. 1, Z. 2 oder S. 6, Sp. 1, Z. 12 und 21 - 22). Der Inhalt des Patents deutet darauf hin, dass Polystyrol nicht vernetzt wird. Dies kann man schliessen aus den geringen Mengen an Peroxid, die in den Beispielen verwendet werden (0,06 % Peroxid in Beispiel 1, 0,125 % Peroxid in Beispiel 3, 0,17 % Peroxid in Beispiel 4, 0,125 % Peroxid in Beispiel 5, wobei der Peroxidgehalt bezogen ist auf die Polystyrolmenge in der Mischung). Der in dem Verfahren der FR-PS verwendete Vernetzungsverstärker, z. B. Divinylbenzol, hat zwei Funktionen: er soll die Vernetzung des Kautschuks verbessern und er soll das Polystyrol vor Abbau schützen. Ein weiterer Hinweis darauf, dass die Lehre der FR-PS nicht beabsichtigt, Polystyrol zu vernetzen, sondern dass es vielmehr die Lehre ist, Polystyrol vor Abbau zu schützen, ist ersichtlich aus der Verwendung von monofunktionellen Monomeren, wie Styrol und Vinyltoluol, die überhaupt nicht in der Lage sind, Polystyrol (zusammen mit einem Peroxid) zu vernetzen, dagegen fähig sind, Polystyrol vor dem Abbau (durch ein Peroxid) zu schützen. Demnach betrifft die FR-PS überhaupt nicht die Vernetzung von Polystyrol.

Die FR-PS-1 259 094 beschreibt die Verwendung von Bis-Maleinimiden als Vernetzungsverstärker bei der Vernetzung von Polystyrol in Kombination mit Peroxiden.

Aufgabe der Erfindung ist es daher, die Vernetzung von Styrolpolymerisaten mit organischen Peroxiden zu ermöglichen, unter Verwendung einer Vorteilhafteren Kombination aus Peroxid und Vernetzungsverstärker, als die Kombination aus Dicumylperoxid und m-Phenylen-bis-maleninsäureimid.

Es ist besonders überraschend, dass sich diese Aufgabe durch Verwendung bestimmter Peroxide, nämlich solcher mit 10-Stunden-Halbwertszeit-Temperaturen unterhalb 106°C, insbesondere aromatischer Perester (z. B. t-Butylperoxy-benzoat) oder aromatischer Diacylperoxide (z. B. Benzoyl-peroxid), in Kombination mit Vernetzungsverstärkern lösen lässt.

Gegenstand der Erfindung ist also ein Verfahren zum Vernetzen und gegebenenfalls Verschäumen von Homopolymeren von gegebenenfalls kernsubstituiertem Styrol, ausgenommen von p-Methylstyrol-Homopolymeren, von Copolymeren aus Styrol und kernsubstituierten Styrolen oder aus mindestens zwei kernsubstituierten Styrolen, von schlagfestem Polystyrol oder von Mischungen dieser Polymeren mittels Kombinationen aus 0,5 - 15 % mindestens eines Vernetzungsverstärkers, der wenigstens zwei aktive (=polymerisierbare) C-C-Doppel- oder C-C-Dreifachbindungen im Molekül enthält (ausgenommen Bis- und Polymaleinsäureimide) und 0,5 - 15 % mindestens eines organischen Peroxids (ausgenommen Hydroperoxide, Persäuren und Ketonperoxide) bei Temperaturen über 110°C, gegebenenfalls in Anwesenheit von Verschäumungsmitteln, dadurch gekennzeichnet, dass als organische Peroxide solche mit einer 10-Stunden-Halbwertszeit-Temperatur unterhalb von 106°C (bestimmt in Benzol) eingesetzt werden.

Vorteilhafte Ausführungsformen des erfindungsgemässen Verfahrens sind in den Patentansprüchen 2 bis 4 wiedergegeben.

Die Vernetzung von Styrol-Polymeren gelingt nicht mittels Peroxiden allein oder Vernetzungsverstärker allein. Sogar Kombinationen aus typischen Vernetzungsinitiatoren (z. B. Dicumylperoxid oder dem Azo-ester 2,2'-Azobis(2-acetoxy-4-methyl-pentan) mit Vernetzungsverstärkern sind völlig wirkungslos.

Die Vernetzung erfolgt vorzugsweise unter überwiegendem oder vollständigem Ausschluss von Luftsauerstoff, am besten unter Stickstoff als Schutzgas. Sie ist aber auch in Gegenwart von Sauerstoff, z. B. in Luft, möglich.

Styrolpolymere der ober genannten Art, die nach dem erfindungsgemässen Verfahren vernetzt wurden, zeichnen sich gegenüber den entsprechenden unvernetzten Styrolpolymeren durch

- ihre erheblich geringere Löslichkeit in organischen Lösungsmitteln,

2

- ihren höheren Erweichungspunkt und
- ihre größere Härte aus.

Als Kernsubstituenten für Styrol-Homopolymere kommen in Betracht:

(1) C$_{1-10}$-Alkyl, insbesondere Methyl (ausgenommen p-Methyl), Ethyl, i-Propyl
(2) C$_{1-10}$-Alkoxy, insbesondere CH$_3$O-,
(3) C$_{1-10}$-Alkoxy-carbonyl, insbesondere CH$_3$O-CO-,
(4) C$_{1-10}$-Alkyl-carbonyl, insbesondere CH$_3$-CO-,
(5) Chlor,
(6) Phenyl,
(7) Phenyloxy,
(8) Phenyloxy-carbonyl,
(9) Phenyl-carbonyl

wobei die Reste (6) bis (9) im Phenylteil wiederum durch die Reste (1) bis (5) substituiert sein können. Poly-(p-methylstyrol) kommt nicht in Betracht.

Bevorzugte Beispiele für kernsubstituierte Polystyrole sind Poly-(chlorstyrol) und Poly-(isopropylstyrol).

Als Styrol-Copolymere kommen solche aus Styrol mit kernsubstituierten Styrolen oder aus mindestens 2 kernsubstituierten Styrolen, einschliesslich p-Methylstyrol, in Betracht. Ein Beispiel hierfür ist Poly-(vinyltoluol) (=Copolymeres aus o-, p- und m-Methylstyrol).

Als schlagfeste Polystyrole sind solche Pfropfpolymeren, Copolymeren oder Polymermischungen zu verstehen, die aus einem überwiegendem Styrol- und/oder kernsubstituiertem Styrol-Anteil und einem geringeren Anteil des elastifizierenden, die Schlagzähigkeit bewirkenden Kautschukanteils bestehen, sowie gegebenenfalls noch einer dritten oder vierten Monomerkomponente (wie Acrylat, Methacrylat oder Vinylacetat). Vorzugsweise beträgt der Kautschukanteil bis zu 25 %, bezogen auf das Gesamtgewicht der Polymeren.

Beispiele für solche schlagfesten Polystyrole sind: Pfropfpolymere aus Styrol oder p-Methylstyrol auf Ethylen-Propylen-Dien-Terpolymer (=EPDM); Pfropfpolymere aus Styrol oder p-Methylstyrol auf Ethylen-Propylen-Copolymer (=EPM); Pfropfpolymere aus Styrol oder p-Methylstyrol auf Polybutadien; Pfropfpolymere aus Styrol oder p-Methylstyrol und Vinylacetat auf EPDM; Pfropfpolymere aus Styrol und Methylmethacrylat auf EPDM; Pfropfpolymere aus Styrol oder p-Methylstyrol und Vinylacetat sowie Methylmethacrylat auf EPDM;

Pfropfpolymere aus Styrol oder p-Methylstyrol auf EPDM und Ethylen-Vinylacetat-Copolymer (=EVA); Pfropfpolymere aus Styrol und Acrylnitril auf Polybutadien (=ABS); Copolymere aus einem überwiegenden Anteil Styrol und einem geringeren Anteil Butadien; mechanische Mischungen aus Polystyrol und Butadien-Styrol-Kautschuk.

Als Vernetzungsverstärker sind Verbindungen mit wenigstens zwei, vorzugsweise wenigstens drei aktiven (= polymerisierbaren) C-C-Doppel- oder C-C-Dreifachbindungen geeignet. Beispiele hierfür sind:

*Allylverbindungen*, beispielsweise Allylderivate der Cyanursäure oder Isocyanursäure (wie Triallylcyanurat, Trial-lylisocyanurat, N,N'-Bis-(4,6-diallyloxy-s-triazinyl-(2))-1,2-diaminoethan, N,N'-Bis-(4,6-diallyloxy-s-triazinyl-(2))-1,6-diami-no-Hexan, N,N'-Bis-(4,6-diallyl-oxys-triazinyl-(2))-piperazin, 2-Butylamino-4,6-diallyl-oxys-triazin); Allylester zwei- oder mehrwertiger Carbonsäuren (wie Triallyltrimellitat, Triallylcitrat, Acetyltriallylcitrat; Diallylterephthalat, Diallylisophthalat, Diallylorthophthalat; Diallylsuccinat, Diallylglutarat, Diallyladipat, Diallylazelat; Diallylhexahydrophthalat); Allylester zwei- oder mehrbasischer anorganischer Säuren (wie Triallylphosphat); Allylether zwei- oder mehrwertiger Alkohole (wie Trimethylolpropantriallylether, Tetraallyloxyethan (=Tetraallylacetal des Glyoxals); 2- oder mehrfach N-allyl-substituierte Säureamide oder Imide (wie N,N-Diallyl-caprinamid, N,N,N',N'-Tetraallyladipinsäurediamid, N,N,N',N'-Tetraallyl-terephthalsäurediamid); "gemischte" Verbindungen mit zwei oder mehr aktiven C-C-Doppelbindungen (wie Allylmethacrylat, Diallylmaleinat, DiallylΔ4-tetrahydrophthalat);

*Methallylverbindungen*, die den oben genannten Allylverbindungen entsprechen, z. B. Trimethallylcyanurat;

*Crotylverbindungen*, die den oben genannten Allylverbindungen entsprechen, z. B. Tricrotylcyanurat;

*Methacrylester zwei- oder mehrwertiger Alkohole*, wie Trimethylolpropantrimethacrylat, Ethylenglycoldimethacrylat, Hexandiol-(1,6)-dimethacrylat;

*Acrylester*, die den oben genannten Methacrylestern zwei-oder mehrwertigen Alkoholen entsprechen, z. B. Trimethylolpropantriacrylat;

*Di- oder Polyvinylverbindungen*, z. B. Divinylbenzol;

*Verbindungen mit C-C-Dreifachbindungen*, wie Tripropargyltrimellitat, oder die "gemischte" Verbindung Dipropargylmaleinat;

Bevorzugt werden Vernetzungsverstärker mit 3 Allylgruppen, sowie Divinylbenzol oder Diallylmaleinat.

Die eingesetzte Menge an Vernetzungsverstärker beträgt vorzugsweise 1 bis 7 Gew. -%, bezogen auf eingesetztes Polymeres.

Als organische Peroxide sind solche mit 10 Stunden-Halb-wertszeit-Temperaturen (= 10 hHT) unter 106°C (in benzolischer Lösung) mit Ausnahme von Hydroperoxiden, Persäuren und Ketonperoxiden (=Reaktionsprodukte von Ketonen mit H$_2$O$_2$) geeignet. Beispiele hierfür sind:

*Perester*, z. B. t-Butylperester (wie t-Butylperoxybenzoat (10 hHT = 105°C), t-Butylperoxy-3,5,5-trimethylhexa-noat (10 hHT = 102°C), t-Butylperoxy-o-methylbenzoat (10 hHT = ca. 95°C), t-Butylperoxyisobutyrat (10 hHT = 79°C), t-Butylperoxy-2-ethylhexanoat (10 hHT = 73°C), t-Butyl-peroxypivalat (10 hHT = 55°C), t-Butylperoxyneohexanoat (10 hHT = 51°C), t-Butylperoxyneoheptanoat (10 hHT = 50°C), t-Butylperoxyneodecanoat (10 hHT = 47°C)); Perester des 2,5-Dihydroperoxy-2,5-dimethyl-hexans (wie 2,5-Bis-(benzoylperoxy)-2,5-dimethyl-hexan (10 hHT = 100°C), 2,5-Bis-(2-ethylhexanoylperoxy)-2,5-dimethyl-hexan (10 hHT = 68°C)); t-Amylperester (wie t-Amylperoxy-benzoat (10 hHT = 101°C), t-Amylperoxy-2-ethylhexanoat (10 hHT = 69°C)); 1,1,3,3-Trimethylbutylperester (=t-Octyl-perester) (wie t-Octylperoxybenzoat (10 hHT = ca. 97°C), t-Octylperoxy-2-ethylhexanoat (10 hHT = ca. 65°C)); Cumylperester (wie Cumylperoxybenzoat (10 hHT = ca. 96°C), Cumylperoxy-2-ethylhexanoat (10 hHT = ca. 64°C));

*Percarbonatester*, z. B. t-Butylpercarbonatester (wie 0-Cyclohexyl-0,0-t-butyl-monoperoxycarbonat (10 hHT = 99°C), 0-2-Ethylhexyl-0,0-t-butyl-monoperoxycarbonat (10 hHT = 99°C), 0-Myristyl-0,0-t-butyl-monoperoxycarbonat (10 hHT 1= 99°C)) und die analogen t-Amyl-, t-Octyl-, Cumyl-perester;

*Perketale*, z. B. t-Butylperketale (wie 2,2-Bis-(t-butyl-peroxy) -propan (10 hHT = 101°C), 2,2-Bis-(t-butylperoxy)-butan (10 hHt = 100°C), 2,2-Bis-(t-butylperoxy)-4-methyl-pentan (10 hHT = 100°C), 1,1-Bis-(t-butylperoxy)-cyclohexan (10 hHT = 93°C), 1,1-Bis-(t-butylperoxy)-3,3,5-trimethyl-cyclohexan (10 hHT = 92°C)) und die analogen t-Amyl-, t-Octyl-, Cumyl-perketale;

*Etherperoxide*, z. B. t-Butyletherperoxide (wie 2-t-Butyl-peroxy-2-butoxy-propan (10 hHT = ca. 98°C), 1-t-Butyl-peroxy-1-methoxycyclohexan (10 hHT = ca. 92°C), 1-t-Butylperoxy-1-butoxy-cyclohexan (10 hHT = ca. 99°C), 1-t-Butylperoxy-1-methoxy-3,5,5-trimethylcyclohexan (10 hHT = ca. 91°C)) und die analogen t-Amyl-, t-Octyl-, Cumyletherperoxide;

*Diacylperoxide*, z. B. aromatische Diacylperoxide (wie Benzoylperoxid (10 hHT = 73°C), o-Methylbenzoylperoxid (10 hHT = 69°C)) und aliphatische Diacylperoxide (wie Lauroylperoxid (10 hHT = 62°C), Decanoylperoxid (10 hHT = 61°C), 3,3,5-Trimethylhexanoylperoxid (10 hHT = 59°C));

*Ketonperoxidester*, z. B. 2,2'-Bis-(benzoylperoxy)-butyl-(2)-peroxid, 1,1-Bis-(benzoylperoxy)-cyclohexan, 1,1'-Bis-(benzoylperoxy)-cyclohexyl-(1)-peroxid, 1,1-Bis-(benzoylperoxy)-3,3,5-trimethyl-cyclohexan, 1,1'-Bis-(benzoylper-oxy)-3,3,5-trimethyl-cyclohexyl-(1)-peroxid.

Bevorzugt werden aromatische Peroxide, wie t-Butylperoxybenzoat, t-Butylperoxy-o-methylbenzoat, Benzoylperoxid, o-Methylbenzoylperoxid. Aber auch Percarbonatester, wie 0-2-Ethylbexyl-0,0-t-butyl-monoperoxycarbonat oder 0-Cyclohexyl-0,0-t-butyl-monoperoxycarbonat haben sich als wirksame Vernetzungsmittel erwiesen.

Die Menge des organischen Peroxids beträgt vorzugsweise 2 bis 7 Gew. -%, bezogen auf eingesetztes Polymeres.

Die Vernetzung gemäß vorliegender Erfindung kann auch in Gegenwart von Antioxydantien, Antiozonantien, Füllstoffen (z. B. Ruß, Calciumcarbonat, Talkum, Calciumsilikat, Aluminiumsilikat, Kaolin, Kieselsäure, SiO2), Glas-fasern, Pigmenten, UV-Stabilisatoren, Verschäumungsmitteln (z. B. 2,2'-Azobisisobutyramid, 2,2'-Azo-bis-(isobuttersäure-ethylester)), Flammschutzmittel, antistatischen Mitteln, Gleitmitteln, Weichmachern oder anderen Zusätzen erfolgen.

Die zur Vernetzung erforderliche Energiezufuhr kann

a) durch direkten Kontakt des zu vernetzenden Polymeren mit einem vorgeheizten Material, z. B. Stahl, geschmolzenes Metall, geschmolzenes Salz, Wasser(dampf), Luft, Stickstoff,
b) durch elektromagnetische Strahlung, z. B. IR, UHF (= Mikrowellen), Röntgenstrahlen, Gammastrahlen, oder
c) durch Korpuskularstrahlen, z. B. Alpha-Strahlen oder Beta-Strahlen (= Elektronenstrahlen)

erfolgen.

Bei dem erfindungsgemässen Verfahren kann das eingesetzte Polymer gleichzeitig mit der Vernetzung auch verschäumt werden. Hierzu setzt man dem Polymeren übliche Verschäumungsmittel zu, z. B. Amide oder Ester, die keine freie Amino- oder Hydrazinogruppe besitzen. Beispiele hierfür sind 2,2'-Azo-bis-isobutyramid und 2,2'-Azo-bis-(isobutter-säureethylester).

Führt man die Vernetzung mit Etherperoxiden oder Perketalen durch, so können auch übliche Verschäumungsmittel mit freien Amino- oder Hydrazinogruppen eingesetzt werden.

Die Erfindung wird durch die nachstehenden Beispiele erläutert:

## Beispiele

Die Prozentangaben der dem Polystyrol zugegebenen Zusätze sind Gewichtsprozente und beziehen sich auf das Gesamtgewicht der Polymeren.

Die Vernetzung des Polystyrols erfolgte unter Sauerstoffausschluß in Stickstoffatmosphäre. Das Styrol-Homopolymer wurde zu Pulver vermahlen (z. B. in einer Kaffeemühle). Die schlagfesten Polystyrole wurden - wegen der Unmöglichkeit, sie auf einfache Weise zu pulverisieren - in Granulatform belassen. Vernetzungsverstärker, Peroxid und gegebenenfalls andere Zusatzstoffe wurden in das Polystyrol durch Verrühren in einem Becherglas eingearbeitet. Nach Zugabe von 3 ml Aceton auf 2 g Polystyrol wurde noch einmal umgerührt. Das Aceton wurde im Trockenschrank bei 70°C entfernt (im Falle der pulvrigen Styrol-Polymere erfolgte die Entfernung des Acetons 1 bis 2 Stunden nach dem Einmischen, im Falle des schlagfesten Styrol-Granulats erfolgte die Entfernung des Acetons innerhalb von 15 Stunden nach 12- bis 24-stündigem Stehenlassen in einem verschlossenen Gefäß bei Raumtemperatur. Die Vernetzung des Polystyrols erfolgte in einem Reagenzglas, das vor dem Zuschmelzen zur Verdrängung des Luftsauerstoffs mit Stickstoff gespült wurde. Zur Vernetzung wurden die zu-

4

geschmolzenen Reagenzgläser in einen auf die gewünschte Vernetzungstemperatur vorgeheizten Trockenschrank gestellt. Zum Aufheizen des Polystyrols auf die eingestellte Vernetzungstemperatur wurden 9 bis 12 Minuten benötigt; um diese Zeit verblieb das Reagenzglas länger im Trockenschrank als in den Tabellen als Vernetzungszeit angegeben ist.

Zur Bestimmung des Vernetzungsgrades wurde das vernetzte Polystyrol mit einer Zange in mittelgrosse Körnchen zerkleinert und in ein vorher gewogenes Drahtnetz aus Edelstahl locker eingepackt. Anschliessend wurde das im Netz befindliche Polystyrol gewogen und 1 Stunde mit siedendem Xylol (80 ml auf 1 g Polystyrol) unter Rückfluß extrahiert. Nach der Vernetzung wurden Netz und Inhalt zum Abspülen in warmes Xylol getaucht und danach zur restlosen Entfernung des Xylols im Trockenschrank 1 Stunde auf 160°C erhitzt. Zur Ermittlung des Gewichtsverlustes wurde nach dem Abkühlen abermals gewogen. Die Menge des im Netz verbliebenen unlöslichen Anteils (= Gelanteil) des vernetzten Polymeren, multipliziert mit hundert und dividiert durch die ursprüngliche Menge an Polymeren, gibt den Vernetzungsgrad. Ein unvernetztes Polystyrol wird unter den eben beschriebenen Bedingungen vollständig aufgelöst. Ein Polystyrol, in dem jede Polymerkette wenigstens eine Vernetzungsbrücke mit der anderen bildet, bleibt in siedendem Xylol vollständig unlöslich.

## Beispiel 1

Polystyrol-Pulver (Schmelzindex (200/5,0) = 9 g/10 Min.) wurde 40 Minuten bei 195°C - 200°C unter Stickstoff mittels Kombinationen aus unterschiedlichen Mengen t-Butylperoxybenzoat (= Perb.) als Vernetzungsmittel und unterschiedlichen Mengen Triallylcyanurat (= TAC) als Vernetzungsverstärker vernetzt. - Zum Vergleich wurde Polystyrol mit 0,5 bis 10 % t-Butylperoxybenzoat in Abwesenheit von Triallylcyanurat zu vernetzen versucht und außerdem mit 1 bis 10 % Triallylcyanurat in Abwesenheit von t-Butylperoxybenzoat, sowie mit 1 bis 10 % Divinylbenzol in Abwesenheit von t-Butylperoxybenzoat.

Beispiel 1 zeigt, dass mit Triallylcyanurat allein und mit Divinylbenzol allein fast keine Vernetzung erzielt wird und dass mit normalen Mengen t-Butylperoxybenzoat ebenfalls keine Vernetzung zu erzielen ist und erst grosse. Mengen Peroxybenzoat (9 %, 10 %) einen geringen Vernetzungsgrad bringen. Es zeigt weiter, dass mit Kombinationen aus kleinen Mengen Peroxid und Vernetzungsverstärker nur unbedeutende (= geringe) Vernetzung bewirkt wird, und dass zur Erzielung guter Vernetzungsgrade grössere Mengen Peroxid und Vernetzungsverstärker erforderlich sind:

| Zusätze | Vernetzungsgrade |
|---|---|
| 0,5 % Perbenzoat (= Perb.) | 0,2 % (Vergleichsversuch) |
| 1 % " | 0,4 % " |
| 2 % " | 0,5 % " |
| 3 % " | 0,7 % " |
| 4 % " | 0,9 % " |
| 5 % " | 1,5 % " |
| 6 % " | 3,6 % " |
| 7 % " | 8,8 % " |
| 8 % " | 7,7 % " |
| 9 % " | 23 % " |
| 10 % " | 20 % " |

| Zusätze | Vernetzungsgrade |
|---|---|
| 1 % Triallylcyanurat (= TAC) | 0,9 % (Vergleichsversuch) |
| 2 % " | 0,7 % " |
| 3 % " | 0,6 % " |
| 4 % " | 0,8 % " |
| 5 % " | 0,6 % " |
| 6 % " | 0,7 % " |
| 7 % " | 0,3 % " |
| 8 % " | 0,6 % " |
| 9 % " | 0,8 % " |
| 10 % " | 0,9 % " |
| -------------------- | |
| 2 % Perb. + 1 % TAC | 4 % " |
| 2 % " + 2 % " | 9 % " |
| 2 % " + 3 % " | 12 % " |
| 2 % " + 4 % " | 36 % " |
| 2 % " + 5 % " | 61 % " |
| 2 % " + 6 % " | 75 % " |

```
2 % " +  7 % "                          77   % "
2 % " +  8 % "                          77   % "
2 % " +  9 % "                          78   % "
2 % " + 10 % "                          --

3 % Perb. +   1 % TAC                    7   % "
3 % "     +   2 % "                      38   % "
3 % "     +   3 % "                      63   % "
3 % "     +   4 % "                      69   % "
3 % "     +   5 % "                      74   % "
3 % "     +   6 % "                      74   % "
3 % "     +   7 % "                      73   % "
3 % "     +   8 % "                      74   % "
3 % "     +   9 % "                      73   % "
3 % "     + 10 % "                       76   % "

Zusätze                               Vernetzungsgrade
4   % Perb. +   1 % TAC                  13 % "
4   % "     +   2 % "                    51 % "
4   % "     +   3 % "                    65 % "
4   % "     +   4 % "                    68 % "
4   % "     +   5 % "                    72 % "
4   % "     +   6 % "                    75 % "
4   % "     +   7 % "                    78 % "
4   % "     +   8 % "                    73 % "
4   % "     +   9 % "                    76 % "
4   % "     + 10 % "                     71 % "

5   % Perb. +   1 % TAC                  26 % "
5   % "     +   2 % "                    51 % "
5   % "     +   3 % "                    76 % "
5   % "     +   4 % "                    77 % "
5   % "     +   5 % "                    72 % "
5   % "     +   6 % "                    74 % "
5   % "     +   7 % "                    72 % "
5   % "     +   8 % "                    71 % "
5   % "     +   9 % "                    74 % "
5   % "     + 10 % "                     65 % "

0,5 % Perb. + 5 % TAC                     8 % "
1   % "      + 5 % "                      34 % "
2   % "      + 5 % "                      60 % "
3   % "      + 5 % "                      67 % "
4   % "      + 5 % "                      71 % "
5   % "      + 5 % "                      75 % "
6   % "      + 5 % "                      70 % "
7   % "      + 5 % "                      74 % "
8   % "      + 5 % "                      74 % "

1 % Divinylbenzol (bei 180°C)            0,3 % (Vergleichsversuch)
3 % "                      "             5,3 % "
5 % "                      "            36   % "
6 % "                      "            15   % "
7 % "                      "            26   % "
8 % "                      "            20   % "
9 % "                      "            17   % "
10 % "                     "            20   % "
```

**Beispiel 2**

Dieses Beispiel ist eine Variante des Beispiels 1; die angewandte Vernetzungstemperatur lag allerdings bei 150°C, also um 50°C tiefer als im Beispiel 1.

Polystyrol-Pulver (Schmelzindex (200/5,0) = 9 g/10 Min.) wurde 40 Minuten bei 150°C unter Stickstoff mittels Kombinationen aus unterschiedlichen Mengen t-Butylperoxybenzoat (=Perb.) als Vernetzungsmittel und unterschiedlichen Mengen Triallylcyanurat (=TAC) als Vernetzungsverstärker vernetzt.

Dieses Beispiel zeigt (wie Beispiel 1), dass zur Erzielung guter Vernetzungsgrade grössere Mengen Peroxid und Vernetzungsverstärker erforderlich sind:

| Zusätze | | | Vernetzungsgrade |
|---|---|---|---|
| 1 % TAC + | 0,5 % Perb. | | 0,6 % |
| 1 % " | + 1 | % " | 1,5 % |
| 1 % " | + 2 | % " | 7,8 % |
| 1 % " | + 3 | % " | 15 % |
| 1 % " | + 4 | % " | 78 % |
| 1 % " | + 6 | % " | 74 % |
| 1 % " | + 8 | % " | 79 % |
| 1 % " | + 10 | % " | 78 % |
| | | | |
| 2 % TAC + | 0,5 % Perb. | | 2,5 % |
| 2 % " | + 1 | % " | 3,8 % |
| 2 % " | + 2 | % " | 13 % |
| 2 % " | + 3 | % " | 57 % |
| 2 % " | + 4 | % " | 64 % |
| 2 % " | + 6 | % " | 68 % |
| 2 % " | + 8 | % " | 67 % |
| 2 % " | + 10 | % " | 82 % |
| | | | |
| 3 % TAC + | 0,5 % Perb. | | 2,5 % |
| 3 % " | + 1 | % " | 10 % |
| 3 % " | + 2 | % " | 49 % |
| 3 % " | + 3 | % " | 82 % |
| 3 % " | + 4 | % " | 77 % |
| 3 % " | + 6 | % " | 79 % |
| 3 % " | + 8 | % " | 79 % |
| 3 % " | + 10 | % " | 81 % |
| | | | |
| 4 % TAC + | 0,5 % Perb. | | 5 % |
| 4 % " | + 1 | % " | 14 % |
| 4 % " | + 2 | % " | 58 % |
| 4 % " | + 3 | % " | 76 % |
| 4 % " | + 4 | % " | 77 % |
| 4 % " | + 5 | % " | 83 % |
| 4 % " | + 6 | % " | 83 % |
| 4 % " | + 7 | % " | 84 % |
| 4 % " | + 8 | % " | 85 % |
| 4 % " | + 9 | % " | 78 % |
| 4 % " | + 10 | % " | 82 % |
| | | | |
| 5 % TAC + | 0,5 % Perb. | | 10 % |
| 5 % " | + 1 | % " | 39 % |
| 5 % " | + 2 | % " | 72 % |
| 5 % " | + 3 | % " | 78 % |
| 5 % " | + 4 | % " | 81 % |
| 5 % " | + 5 | % " | 82 % |
| 5 % " | + 6 | % " | 84 % |
| 5 % " | + 7 | % " | 84 % |
| 5 % " | + 8 | % " | 84 % |
| 5 % " | + 9 | % " | 79 % |
| 5 % " | + 10 | % " | 74 % |
| 5 % " | + 15 | % " | 75 % |
| 5 % " | + 20 | % " | 80 % |

**Vergleichsbeispiel 1**

Polystyrol-Pulver (Schmelzindex (200/5,0) = 9g/10 min.) wurde 40 Minuten bei 195° - 200°C unter Stickstoff mittels Kombinationen aus Triallylcyanurat (=TAC) mit den 4 typischen Vernetzungsperoxiden 2,5-Bis-(t-butylperoxy)-2,5-dimethyl-hexan (-Lup. 101) (10 hHT = 119°C), 2,5-Bis-(t-butylperoxy)-2,5-dimethyl-hexin-(3) (-Lup. 130) (10 hHT = 128°C), alpha, alpha'Bis-(t-butylperoxy)-diisopropylbenzol (-Lup. 802) (10 hHT = 120°C) und Dicumylperoxid (=Dicup) (10 hHT = 115°C) zu vernetzen versucht.

Vergleichsbeispiel 1 demonstriert die äusserst überraschende Tatsache, dass die besten Vernetzungsperoxide nicht in der Lage sind, Polystyrol zu vernetzen, wobei zu beachten ist, dass ihre 10 Stunden-Halbwertszeit-Temperaturen über 106°C liegen:

| Zusätze | Vernetzungsgrade |
|---|---|
| (A) 2 % TAC + 0,5 % Lup. 101 | 3 % |
| 3 % TAC + 0,5 % Lup. 101 | 8 % |
| 3 % " + 1 % " | 7 % |
| 3 % " + 2 % " | 7 % |
| 3 % " + 3 % " | 9 % |
| 4 % TAC + 1 % Lup. 101 | 9 % |
| 4 % " + 2 % " | 10 % |
| 4 % " + 3 % " | 13 % |
| 4 % " + 4 % " | 13 % |
| 5 % TAC + 1 % Lup. 101 | 10 % |
| 5 % " + 2 % " | 12 % |
| 5 % " + 3 % " | 15 % |
| 5 % " + 4 % " | 17 % |
| 5 % " + 5 % " | 15 % |
| 5 % TAC + 3 % Lup. 101 (entspr. ca. 4 % Perb.) | 12 % |
| 6 % " + 3 % " " | 13 % |
| 7 % " + 3 % " " | 34 % |
| 8 % " + 3 % " " | 37 % |
| (B) 5 % TAC + 3 % Lup. 130 (entspr. ca. 4 % Perb.) | 2 % |
| 6 % " + 3 % " " | 4 % |
| 7 % " + 3 % " " | 6 % |
| 8 % " + 3 % " " | 7 % |
| (C) 5 % TAC + 3 % Lup. 802 (entspr. ca. 4 % Perb.) | 6 % |
| 6 % " + 3 % " " | 6 % |
| 7 % " + 3 % " " | 11 % |
| 8 % " + 3 % " " | 10 % |
| (D) 5 % TAC + 5,5 % Dicup (entspr. ca. 4 % Perb.) | 3 % |
| 6 % " + 5,5 % " " | 5 % |
| 7 % " + 5,5 % " " | 5 % |
| 8 % " + 5,5 % " " | 6 % |

**Vergleichsbeispiel 2**

Polystyrol-Pulver (Schmelzindex (200/5,0) = 9g/10 Min.) wurde 40 Minuten bei 195° - 200°C unter Stickstoff mittels Kombinationen aus den Azo-estern 2,2'-Azo-bis-(2-acetoxy-4-methylpentan) (=Luazo®AMP) (10 hHT = ca. 179°C) bzw. 2,2'-Azo-bis-(2-propionoxy-4-methyl-pentan (=Luazo®PMP) (10 hHT = ca. 185°C) und Triallylcyanurat (=TAC) zu vernetzen versucht.

Vergleichsbeispiel 2 zeigt die ebenfalls überraschende Tatsache, dass die für die Vernetzung von Polymeren wie Polyethylen, EPDM oder Polypropylen wirkungsvollen Luazo®AMP (10 hHT = 179°C also über 106°C) und Luazo®PMP (10 hHT = ca. 185°C) zur Vernetzung von Polystyrol ebenso ungeeignet sind wie die typischen Vernetzungsperoxide aus dem vorhergehenden Vergleichsbeispiel 1:

| Zusätze (A) Mittels TAC + Luazo®AMP: | Vernetzungsgrade |
|---|---|
| 7,5 % TAC + 1 % Luazo®AMP | 1,2 % |
| 7,5 % " + 2 % " | 3,9 % |

| | |
|---|---|
| 7,5 % "   + 3 % " | 4,7 % |
| 7,5 % "   + 4 % " | 0,7 % |
| 7,5 % "   + 5 % " | 0,5 % |

(B) Mittels TAC + Luazo®PMP:

| | |
|---|---|
| 7,5 % TAC + 1 % Luazo®PMP | 1,1 % |
| 7,5 % "   + 2 % " | 0,4 % |
| 7,5 % "   + 3 % " | 0,7 % |
| 7,5 % "   + 4 % " | 1,6 % |
| 7,5 % "   + 5 % " | 1,0 % |

## Beispiel 3

Polystyrol-Pulver (Schmelzindex (200/5,0) = 9 g/10 Min.) wurde 40 Minuten bei 195°C - 200°C mit Kombinationen aus verschiedenen Mengen t-Butylperoxybenzoat (= Perb.) als Vernetzungsmittel und Triallylcyanurat (= TAC) als Vernetzungsverstärker in der einen Versuchsreihe im offenen Porzellanschälchen (also in Gegenwart von Luftsauerstoff), in der anderen zum Vergleich unter Stickstoff in Ampullen vernetzt.

Aus diesem Beispiel ist zu ersehen, dass sich Polystyrol auch in Gegenwart von Sauerstoff vernetzen lässt, jedoch deutlich niedrigere Vernetzungsgrade liefert als in Abwesenheit von Sauerstoff:

| | Vernetzungsgrade | |
|---|---|---|
| Zusätze | Im offenen Schälchen (also in Luft) | In Ampullen (unter Stickstoff) |
| 3 % Perb. +   5 % TAC | 25 % | (74 %) |
| 4 % Perb. +   7 % TAC | 40 % | (78 %) |
| 4 % "   + 8 % " | 37 % | (73 %) |
| 4 % "   + 9 % " | 35 % | (76 %) |
| 4 % "   + 10 % " | 33 % | (71 %) |
| 5 % Perb. + 9 % TAC | 33 % | (72 %) |

## Beispiel 4

Polystyrol-Pulver (Schmelzindex (200/5,0) = 9 g/10 Min.) wurde 40 Minuten bei 150°C und bei 195°C - 200°C unter Stickstoff mittels Kombinationen aus t-Butylperoxybenzoat (= Perb.) und einer grösseren Zahl verschiedener bi- und trifunktioneller Vernetzungsverstärker vernetzt.

Aus diesem Beispiel ist zu ersehen, dass Divinylbenzol bereits bei der kleinen Einsatzmenge von 1 % den guten Vernetzungsgrad von 70 % gibt, bei grösseren Einsatzmengen (3 % bzw. 4 %) aber schlechtere Vernetzungsgrade (66 % bzw. 53 %). Es ist ausserdem zu erkennen, dass die anderen bifunktionellen Vernetzungsverstärker erst bei Anwendung grösserer Mengen akzeptable Vernetzungsgrade liefern. Ausserdem ist zu ersehen, dass bei der höheren Temperatur von 195°C - 200°C schlechtere Vernetzungsgrade erzielt werden als bei der tieferen Temperatur von 150°C.

Zusätze  Vernetzungsgrade

(A) Mit 4 % Perbenzoat + 1 % Vernetzungsverstärker bei 150°C:

| | |
|---|---|
| 4 % Perb. + 1 % Triallyltrimellitat | 34   % |
| "   + 1 % Diallylisophthalat | 0,2 % |
| "   + 1 % Diallylterephthalat | 3,3 % |
| "   + 1 % Triallylphosphat | 54   % |
| "   + 1 % Triallylcyanurat | 46   % |
| "   + 1 % Triallylisocyanurat | 23   % |
| "   + 1 % Trimethylolpropantrimethacrylat | 2,0 % |
| "   + 1 % Äthylenglycoldimethacrylat | 2,0 % |
| "   + 1 % Diallylazelat | 2,4 % |
| "   + 1 % Diallyladiplat | 2,1 % |
| "   + 1 % Diallylglutarat | 1,8 % |
| "   + 1 % Diallylmaleinat | 14   % |
| "   + 1 % Divinylbenzol | 70   % |
| "   + 1 % Trimethylolpropantriacrylat | 4   % |

**(B)  Mit 4 % Perbenzoat + 3 % Vernetzungsverstärker bei**

| | 150°C | 195°-200°C |
|---|---|---|
| 4 % Perb. + 3 % Triallyltrimellitat | 60 % | 32 % |
| "      + 3 % Diallylisophthalat | 3 % | -- |
| "      + 3 % Diallylterephthalat | 30 % | 20 % |
| "      + 3 % Triallylphosphat | 72 % | -- |
| "      + 3 % Triallylcyanurat | 82 % | 58 % |
| "      + 3 % Triallylisocyanurat | 67 % | 27 % |
| "      + 3 % Trimethylolpropantrimethacrylat | 30 % | 9 % |
| "      + 3 % Äthylenglycoldimethacrylat | 33 % | 12 % |
| "      + 3 % Diallylazelat | 16 % | 24 % |
| "      + 3 % Diallyladipat | 24 % | 14 % |
| "      + 3 % Diallylglutarat | 17 % | 14 % |
| "      + 3 % Diallylmaleinat | 69 % | 35 % |

**Zusätze  Vernetzungsgrade**

| | 150°C: | 195°C - 200°C: |
|---|---|---|
| 4 % Perb. + 3 % Divinylbenzol | 66 % | 57 % |
| "      + 3 % Trimethylolpropantriacrylat | 28 % | 8 % |

**(C)  Mit 5 % Perbenzoat + 4 % Vernetzungsverstärker bei 150°C:**

| | |
|---|---|
| 5 % Perb. + 4 % Triallyltrimellitat | 61 % |
| "      + 4 % Diallylisophthalat | 63 % |
| "      + 4 % Diallylterephthalat | 63 % |
| "      + 4 % Triallylphosphat | 72 % |
| "      + 4 % Triallylcyanurat | 77 % |
| "      + 4 % Triallylisocyanurat | 72 % |
| "      + 4 % Trimetylolpropantrimethacrylat | 29 % |
| "      + 4 % Ethylenglycoldimethacrylat | 42 % |
| "      + 4 % Diallylazelat | 56 % |
| "      + 4 % Diallyladipat | 64 % |
| "      + 4 % Diallylglutarat | 63 % |
| "      + 4 % Diallylmaleinat | 81 % |
| "      + 4 % Divinylbenzol | 53 % |
| "      + 4 % Trimethylolpropantriacrylat | 41 % |

**(D)  Mit 5 % Perbenzoat + 5 % Vernetzungsverstärker bei 150°C:**

| | |
|---|---|
| 5 % Perb. + 5 % Trimethylolpropantrimethacrylat | 45 % |
| "      + 5 % Ethylenglycoldimethacrylat | 54 % |

**(E)  Mit 5 % Perbenzoat + 7 % Vernetzungsverstärker bei 150°C:**

| | |
|---|---|
| 5 % Perb. + 7 % Trimethylolpropantrimethacrylat | 44 % |
| "      + 7 % Ethylenglycoldimethacrylat | 56 % |
| "      + 7 % Trimethylolpropantriacrylat | 61 % |

**Zusätze                                       Vernetzungsgrade**
**(F)  Mit 6 % Perbenzoat + 5 % Vernetzungsverstärker bei 150°C:**

| | |
|---|---|
| 6 % Perb. + 5 % Trimethylolpropantrimethacrylat | 42 % |
| "      + 5 % Ethylenglycoldimethacrylat | 46 % |
| "      + 5 % Trimethylolpropantriacrylat | 53 % |

**Beispiel 5**

Polystyrol-Pulver (Schmelzindex (200/5,0) = 9 g/10 Min.) wurde 40 Minuten bei 150°C und bei 195°C - 200°C unter Stickstoff mittels Kombinationen aus Triallylcyanurat (= TAC) bzw. Triallylphosphat (= TAPA) bzw. Divinylbenzol und einer grösseren Zahl äquivalenter Mengen verschiedener Peroxide vernetzt.

Beispiel 5 zeigt, dass

— aromatische Perester (Perbenzoat, o-Methylperbenzoat) und
— aromatische Diacylperoxide (Benzoylperoxid, o-Methylbenzoylperoxid) die beste Vernetzungwirksamkeit aufweisen,
— Percarbonatester (0,0-t-Butyl-0-2-ethylhexyl-monoperoxycarbonat, 0,0-t-Butyl-0-cyclohexyl-monoperoxycarbonat) ebenfalls gut wirksam sind,
— aliphatische Perester (Perisononanoat, Peroctoat) dagegen und ebenso
— aliphatische Diacylperoxide (Isononanoylperoxid, Decanoylperoxid) eine deutlich geringere Vernetzungswirksamkeit besitzen,
— von den Perketalen nur die beiden am tiefsten anspringenden, nämlich die beiden cycloaliphatischen, in der Lage sind eine mässige Vernetzungswirksamkeit zu entfalten und
— das Etherperoxid 1-t-Butylperoxy-1-methoxy-3,3,5-tri methylcyclohexan ebenfalls nur eine mässige Vernetzungswirksamkeit zeigt.

**(A) Bei 150°C mit 3 % Vernetzungsverstärker + 4 % Perbenzoat bzw. äquivalente Mengen anderer Peroxide**

|  | Peroxid | Vernetzungsgrade mit | |
| --- | --- | --- | --- |
|  |  | 3 % TAC | 3 % TAPA |
| 4 % | t-Butylperoxy-benzoat | 72 % | 78 % |
| 4,29 % | t-Butylperoxy-o-methylbenzoat | 79 % | 73 % |
| 3,01 % | 3,3-Bis(t-butylperoxy)-buttersäure-ethylester | 3 % | 5 % |
| 6,02 % | — " — | 1 % | 1 % |
| 3,44 % | 4,4-Bis(t-butylperoxy)-valeriansäure-n-butylester | 4 % | 2 % |
| 6,88 % | — " — | 1 % | 1 % |
| 2,41 % | 2,2-Bis(t-butylperoxy)-butan | 8 % | 4 % |
| 4,82 % | — " — | 2 % | 1 % |
| 2,68 % | 1,1-Bis(t-butylperoxy)-cyclohexan | 6 % | 11 % |
| 5,36 % | — " — | 27 % | 13 % |
| 3,11 % | 1,1-Bis(t-butylperoxy)3,3,5-trimethyl-cyclohexan | 14 % | 44 % |
| 6,22 % | — " — | 38 % | 10 % |
| 5,07 % | 0,0-t-Butyl-0-2-ethylhexyl-monoperoxy-carbonat | 76 % | 58 % |
| 4,45 % | 0,0-t-Butyl-0-cyclohexyl-monoperoxy-carbonat | 59 % | 61 % |
| 4,74 % | t-Butylperoxy-3,5,5-trimethylhexanoat | 13 % | 28 % |
| 4,45 % | t-Butylperoxy-2-ethylhexanoat | 9 % | 17 % |
| 4,99 % | Bis(benzoyl)-peroxid (als Paste) | 53 % | 67 % |
| 5,57 % | Bis(o-methylbenzoyl)-peroxid | 65 % | 74 % |
| 6,48 % | Bis(3,5,5-trimethylhexanoyl)-peroxid | 3 % | 3 % |
| 7,05 % | Bis(decanoyl)-peroxid | 16 % | 13 % |

**(B) Bei 150°C mit 4 % Vernetzungsverstärker + 5 % Perbenzoat bzw. äquivalente Mengen anderer Peroxide**

|  | Vernetzungsgrade Peroxid | 4 % TAC | 4 % TAPA |
| --- | --- | --- | --- |
| 5 % | t-Butylperoxy-benzoat | 79 % | 75 % |
| 5,36 % | t-Butylperoxy-o-methylbenzoat | 71 % | 74 % |
| 3,67 % | 3,3-Bis(t-butylperoxy)-buttersäure-ethylester | 2 % | 2 % |
| 7,52 % | 3,3-Bis(t-butylperoxy)-buttersäure-ethylester | 1 % | 1 % |

11

| | | 1 % | 2 % |
|---|---|---|---|
| 4,30 % | 4,4-Bis(t-butylperoxy)-valeriansäure-n-butylester | 1 % | 2 % |
| 8,60 % | 4,4-Bis(t-butylperoxy)-valeriansäure-n-butylester | 1 % | 1 % |
| 3,20 % | 2,2-Bis(t-butylperoxy)-butan | 21 % | 14 % |
| 6,04 % | – " – | 1 % | 2 % |
| 3,35 % | 1,1-Bis(t-butylperoxy)-cyclohexan | 13 % | 36 % |
| 6,70 % | – " – | 40 % | 43 % |
| 3,89 % | 1,1-Bis(t-butylperoxy)-3,3,5-tri-methyl-cyclohexan | 23 % | 49 % |
| 7,78 % | 1,1-Bis(t-butylperoxy)-3,3,5-tri-methyl-cyclohexan | 26 % | 12 % |
| 6,34 % | 0,0-t-Butyl-0-2-ethylhexyl-mono-peroxycarbonat | 57 % | 56 % |
| 5,57 % | 0,0-t-Butyl-0-cyclohexyl-mono-peroxycarbonat | 64 % | 64 % |
| 5,93 % | t-Butylperoxy-3,5,5-trimethyl-hexanoat | 26 % | 43 % |
| 5,57 % | t-Butylperoxy-2-ethylhexanoat | 37 % | 43 % |
| 6,23 % | Bis(benzoyl)-peroxid (als Paste) | 57 % | 75 % |
| 6,96 % | Bis(o-methylbenzoyl)-peroxid | 49 % | 78 % |
| 8,09 % | Bis(3,5,5-trimethylhexanoyl)-peroxid | 3 % | 26 % |
| 8,82 % | Bis(decanoyl)-peroxid | 39 % | 32 % |
| 6,30 % | 1-t-Butylperoxy-1-methoxy-3,3,5-tri-methylcyclohexan | 41 % | 50 % |

(C) Bei 195°C - 200°C mit 3 % Vernetzungsverstärker + 4 % Perbenzoat bzw. äquivalente Mengen anderer Peroxide: Vernetzungsgrade mit

| Peroxid | | 3 % TAC | 3 % Divinylbenzol |
|---|---|---|---|
| 4 % | t-Butylperoxybenzoat | 71 % | 53 % |
| 4,29 % | t-Butylperoxy-o-methylbenzoat | 54 % | 69 % |
| 3,01 % | 3,3-Bis(t-butylperoxy)-buttersäure-ethylester | 15 % | -- |
| 6,02 % | 3,3-Bis(t-butylperoxy)-buttersäure-ethylester | 1 % | 3 % |
| 3,44 % | 4,4-Bis(t-butylperoxy)-valerian-säure-n-butylester | 4 % | -- |
| 6,88 % | 4,4-Bis(t-butylperoxy)-valerian-säure-n-butylester | 1 % | 3 % |
| 2,41 % | 2,2-Bis(t-butylperoxy)-butan | 7 % | -- |
| 4,82 % | – " – | 2 % | 14 % |
| 2,68 % | 1,1-Bis(t-butylperoxy)-cyclohexan | 8 % | -- |
| 5,36 % | – " – | 18 % | 48 % |
| 3,11 % | 1,1-Bis(t-butylperoxy)-3,3,5-tri-methyl-cyclohexan | 8 % | -- |
| 6,22 % | 1,1-Bis(t-butylperoxy)-3,3,5-tri-methyl-cyclohexan | 15 % | 54 % |
| 5,07 % | 0,0-t-Butyl-0-2-ethylhexyl-mono-peroxycarbonat | 48 % | 52 % |
| 4,45 % | 0,0-t-Butyl-0-cyclohexyl-mono-peroxycarbonat | 59 % | -- |
| 4,74 % | t-Butylperoxy-3,5,5-trimethyl-hexanoat | 17 % | -- |
| 4,45 % | t-Butylperoxy-2-ethylhexanoat | 19 % | -- |
| 4,99 % | Bis(benzoyl)-peroxid (als Paste) | 48 % | 78 % |
| 5,57 % | Bis(o-methylbenzoyl)-peroxid | 46 % | 68 % |
| 6,48 % | Bis(3,5,5-trimethylhexanoyl)-peroxid | 2 % | 17 % |
| 7,05 % | Bis(decanoyl)-peroxid | 27 % | 27 % |

**(D) Bel 150°C mit 5 % Vernetzungsverstärker + 6 % Perbenzoat bzw. äquivalente Mengen anderer Peroxide**

| Peroxid | Vernetzungsgrade mit | |
|---|---|---|
| | 5 % TAC | 5 % TAPA |
| 6 % t-Butylperoxybenzoat | 85 % | 69 % |
| 4,02 % 1,1-Bis(t-butylperoxy)-cyclohexan | 29 % | 61 % |
| 8,04 % – " – | 45 % | 54 % |
| 4,67 % 1,1-Bis(t-butylperoxy)-3,3,5-trimethylcyclohexan | 54 % | 69 % |
| 9,34 % 1,1-Bis(t-butylperoxy)-3,3,5-trimethylcyclohexan | 58 % | 25 % |
| 7,11 % t-Butylperoxy-3,5,5-trimethyl-hexanoat | 37 % | 65 % |
| 6,68 % t-Butylperoxy-2-ethylhexanoat | 20 % | 71 % |
| 9,71 % Bis(3,5,5-trimethylhexanoyl)-peroxid | 19 % | 41 % |
| 10,58% Bis(decanoyl)-peroxid | 52 % | 50 % |

**(E) Bel 195°C - 200°C mit 4 % Divinylbenzol + 2 % aliphatischen Diacylperoxiden, deren Mengen 5 % Perbenzoat äquivalent sind:**

| Peroxid | Vernetzungsgrad mit 4 % Divinylbenzol |
|---|---|
| 8,09 % Bis(3,5,5-trimethylhexanoyl)-peroxid | 31 % |
| 8,82 % Bis(decanoyl)-peroxid | 37 % |

**Beispiel 6**

Polystyrol-Pulver (Schmelzindex (200/5,0) = 9 g/10 Min.) wurde 40 Minuten bei 150°C und 195°C - 200°C unter Stickstoff mittels Kombinationen aus verschiedenen Vernetzungsverstärkern und verschiedenen Peroxiden in Gegenwart eines Antioxydants (TBK = 2,6-Di-t-butyl-p-kresol) vernetzt.

Man erkennt aus (B), dass bei 150°C bessere Vernetzungsgrade erzielt werden als bei 195°C - 200°C und dass durch Zusatz von Antioxydant der Vernetzungsgrad nur um weniges verringert wird, und ausserdem, dass mit steigender Antioxydant-Menge der Vernetzungsgrad etwas absinkt.

Man erkennt aus Abschnitt (C), in dem verschiedene Kombinationen aus Vernetzungsverstärker + Peroxid verwendet werden, dass der Zusatz von 0,1 % TBK-Antioxydant den Vernetzungsgrad sowohl erniedrigt als auch erhöht als auch unbeeinflusst lässt.

**(A) Zusätze**

| | Vernetzungsgrade bei 150°C | |
|---|---|---|
| 0,01 % TBK-Antioxydant | 0,3 % | (Vergleichsversuch) |
| 0,1 % " | 0,5 % | " |
| 0,3 % " | 0,3 % | " |
| 0,1 % TBK + 4 % t-Butylperoxybenzoat (=Perb.) | 0 % | " |
| 0,3 % " + 4 % " | 0 % | " |
| 1 % " + 4 % " | 0 % | " |
| 2 % " + 4 % " | 0,5 % | " |
| 3 % " + 4 % " | 0,1 % | " |
| 0,1 % TBK + 3 % Triallylcyanurat (=TAC) | 0,5 % | " |
| 0,3 % " + 3 % " | 0,5 % | " |

**(B) Zusätze**

| | Vernetzungsgrade bei | |
|---|---|---|
| | 150°C | 195° - 200°C |
| 3 % TAC + 4 % Perb. (ohne TBK-Antioxydant) | 79 % | 67 % |
| 3 % " + 4 % " + 0,01 % TBK | 81 % | 49 % |
| 3 % " + 4 % " + 0,1 % TBK | 78 % | 56 % |
| 3 % " + 4 % " + 0,3 % TBK | 72 % | 28 % |

Vernetzungsgrade bei 150°C

| (C) Zusätze (äquivalente Mengen Peroxid) | mit 0,1 TBK | ohne TBK |
|---|---|---|
| 3 % Diallylmaleinate<br>+ 4 % t-Butylperoxybenzoat | 37 % | 58 % |
| 3 % Triallyltrimellitat<br>+ 5,07 % 0,0-t-Butyl-0-2-ethylhexyl-monoperoxycarbonat | 37 % | 33 % |
| 3 % Triallylisocyanurat<br>+ 4,45 % 0,0-t-Butyl-0-cyclohexyl-monoperoxycarbonat | 55 % | 43 % |
| 3 % Divinylbenzol<br>+ 4,99 % Bis(benzoyl)-peroxid | 75 % | 78 % |
| 3 % Triallylphosphat<br>+ 5,57 % Bis(o-methylbenzoyl)-peroxid | 56 % | 58 % |
| 3 % Triallylcyanurat<br>+ 4,29 % t-Butylperoxy-o-methylbenzoat | 44 % | 61 % |
| 3 % Divinylbenzol<br>+ 4 % t-Butylperoxybenzoat | 63 % | 56 % |
| 3 % Diallylmaleinat<br>+ 4,99 % Bis(benzoyl)-peroxid | 54 % | 52 % |
| 3 % Triallylphosphat<br>+ 4 % t-Butylperoxybenzoat | 73 % | 74 % |
| 3 % Triallylcyanurat<br>+ 4 % t-Butylperoxybenzoat | 72 % | 68 % |
| 3 % Triallylisocyanurat<br>+ 4 % t-Butylperoxybenzoat | 56 % | 53 % |
| 3 % Triallylcyanurat<br>+ 5,07 % 0,0-t-Butyl-0-2-ethylhexyl-monoperoxycarbonat | 61 % | 73 % |

## Beispiel 7

In diesem Beispiel wird die Vernetzung von schlagfestem Polystyrol beschrieben. Da sich die vier verwendeten schlagfesten Polystyrol-Typen mit den zur Verfügung stehenden Geräten nicht zu Pulver zermahlen liessen, wurde - wie schon eingangs beschrieben - nach Zugabe aller Zusätze sowie von 8 ml Aceton zu 2 g schlagfestem Polystyrolgranulat in ein breit ausgezogenes Reagenzglas, das Reagenzglas verschlossen, über Nacht stehen gelassen und das Aceton bei 70°C über einen Zeitraum von 15 Stdn. vollständig entfernt. Die Vernetzung und alles Weitere erfolgt in der üblichen Weise.

Die vier schlagfesten Polystyrolgranulat-Typen PS 454 C, PS 475 K, PS 586 G und PS 436 C der BASF AG, die Pfropfpolymerisate von Styrol auf Polybutadien darstellen und ca. 20 % Polybutadien enthalten, wurden 40 Minuten bei 150°C bzw. 195°C unter Stickstoff mittels einer Kombination aus 3 % Triallylcyanurat (= TAC) und 4 % t-Butylperoxybenzoat (=Perbenzoat) vernetzt.

| | | Vernetzungsgrade bei | |
|---|---|---|---|
| Zusätze | | 150°C | 195°C |
| (A) | PS 454 C (ohne Zusätze) | 0,6 % | (Vergleichsversuch) |
| | PS 475 K (ohne Zusätze) | 0,5 % | " |
| | PS 586 G (ohne Zusätze) | 0,1 % | " |
| | PS 436 C (ohne Zusätze) | 0,2 % | " |
| (B) | PS 454 C 3 % TAC | 0,8 % | " |
| | PS 475 K 3 % " | 0,8 % | " |
| | PS 586 G 3 % " | 1,0 % | " |
| | PS 436 C 3 % " | 0,4 % | " |

| | | Vernetzungsgrade bei | |
|---|---|---|---|
| Zusätze | | 150°C | 195°C |
| (C) | PS 454 C | 4 % Perbenzoat | 1,5 % (Vergleichsversuch) |
| | PS 475 K | 4 % " | 1,8 % " |
| | PS 586 G | 4 % " | 4,2 % " |
| | PS 436 C | 4 % " | 0,6 % " |

14

| (D) | PS 454 C | 3 % TAC + 4 % Perbenzoat 75 | % | -- |
|---|---|---|---|---|
| | PS 475 K | 3 % " + 4 % " 80 | % | -- |
| | PS 586 G | 3 % " + 4 % " 77 | % | 76 % |
| | PS 436 C | 3 % " + 4 % " 75 | % | -- |

**Beispiel 8**

In diesem Beispiel wird unter (A) die Mindestvernetzungs-Temperatur und unter (B) die Mindestvernetzungs-Zeit ermittelt.

Polystyrol-Pulver (Schmelzindex (200/5,0) = 9g/10 Min.) wurde in Teil (A) 40 Minuten bei verschiedenen Temperaturen unter Stickstoff mittels 7 % Triallylcyanurat (= TAC) und 4 % t-Butylperoxybenzoat (= Perb.) und in Teil (B) bei 150°C für verschiedene Zeiten unter Stickstoff mittels 3 % Triallylcyanurat (= TAC) und 4 % Perbenzoat (= Perb.) vernetzt.

Man ersieht aus (A), dass bei einer Vernetzungszeit von 40 Minuten die Mindestvernetzungs-Temperatur bei etwa 130°C und die optimale Vernetzungs-Temperatur bei etwa 150°C liegt. Aus (B) ist zu erkennen, dass bei einer Vernetzungstemperatur von 150°C die Mindestvernetzungszeit zwischen 5 und 10 Minuten liegt.

**Vernetzung mittels 7 % TAC + 4 % Perb.**
**(A) für 40 Min. bei folgenden Temperaturen**          **Vernetzungsgrade**

| | |
|---|---|
| 90°C | 0,3 % (Vergleichsversuch) |
| 100°C | 0,6 % " |
| 110°C | 0,7 % " |
| 120°C | 14,6 % |
| 130°C | 46 % |
| 140°C | 64 % |
| 150°C | 66 % |
| 160°C | 64 % |
| 170°C | 63 % |
| 180°C | 59 % |
| 190°C | 54 % |
| 195°C | 53 % |
| 200°C | 51 % |
| 205°C | 50 % |
| 210°C | 47 % |
| 220°C | 45 % |
| 230°C | 42 % |

**Vernetzung mittels 3 % TAC + 4 % Perb.**
**(B) bei 150°C für folgende Zeiten**          **Vernetzungsgrade**

| | |
|---|---|
| 5 Minuten | 19 % |
| 10 " | 56 % |
| 15 " | 66 % |
| 20 " | 60 % |
| 25 " | 62 % |
| 30 " | 60 % |
| 35 " | 68 % |
| 40 " | 68 % |
| 45 " | 74 % |
| 50 " | 70 % |
| 55 " | 79 % |
| 60 " | 78 % |

**Beispiel 9**

Dieses Beispiel zeigt die Vernetzungswirksamkeit von Kombinationen aus mehreren Peroxiden mit mehreren Vernetzungsverstärkern.

Polystyrol-Pulver (Schmelzindex (200/5,0) = 9 g/10 Min.) wurde 40 Minuten bei 150°C unter Stickstoff mittels Kombinationen aus mehreren Peroxiden und mehreren Vernetzungsverstärkern vernetzt, wobei die eingesetzten Mengen 5 % Perbenzoat und 4 % Triallylcyanurat entsprechen.

Aus diesem Beispiel ist zu ersehen, dass Kombinationen aus mehreren Peroxiden und mehreren Vernet-

15

zungsverstärkern sehr gute Vernetzungsgrade geben, die denen aus Kombinationen aus einem Peroxid und einem Vernetzungsverstärker nicht nachstehen.

Abkürzungen:

a) TAC = Triallylcyanurat, TAPA = Triallylphosphat, DIVYB = Divinylbenzol, DAMA = Diallylmaleinat
b) Perb = t-Butylperoxybenzoat, o-MePerb = t-Butylperoxy-o-methylbenzoat, Bp = Bis-(benzoyl)-peroxid, Tbehc = 0,0-t-Butyl-0 - 2-ethylhexyl-monoperoxycarbonat

| Zusätze (äquivalente Mengen Peroxid) | Vernetzungsgrade |
|---|---|
| 5 % Perb + 4 % TAC | 77 % |
| 5 % Perb + 2 % TAC + 2 % TAPA | 81 % |
| 5 % Perb + 1,33 % TAC + 1,33 % TAPA + 1,33 % DIVYB | 82 % |
| 2,5 % Perb + 2,68 % o-MePerb + 4 % TAC | 73 % |
| 2,5 % Perb + 2,68 % o-MePerb + 2 % TAC + 2 % TAPA | 74 % |
| 2,5 % Perb + 2,68 % o-MePerb + 1,33 % TAC + 1,33 % TAPA + 1,33 % DIVYB | 80 % |
| 1,67 % Perb + 1,79 % o-MePerb + 1,66 % Bp + 4 % TAC | 59 % |
| 1,67 % Perb + 2,11 % Tbehc + 1,66 % Bp + 2 % TAC + 2 % TAPA | 80 % |
| 1,67 % Perb + 1,79 % o-MePerb + 1,66 % Bp + 1,33 % TAC + 1,33 % DAMA + 1,33 % DIVYB | 75 % |

## Beispiel 10

Polystyrol-Pulver (Schmelzindex (200/5,0) = 9 g/10 Min.) wurde 40 Minuten bei 190°C unter Stickstoff mittels einer Kombination aus 5 % t-Butylperoxybenzoat (=Perb) und 4 % Triallylcyanurat (=TAC) in Gegenwart von 5 % der Verschäumungsmittel 2,2'-Azo-bis-(isobutyramid) bzw. 2,2'-Azo-bis-(isobuttersäure-ethylester) vernetzt.

Dieses Beispiel zeigt, dass die Vernetzung durch die Verschäumungsmittel nicht beeinträchtigt wird und die Vernetzungsgrade nur knapp unter denjenigen liegen, die in. Abwesenheit der Verschäumungsmittel erzielt werden:

| Zusätze | Vernetzungsgrad |
|---|---|
| 5 % Perb + 4 % TAC | 83 % |
| 5 % Perb + 4 % TAC + 5 % 2,2'-Azo-bis-(isobutyramid) | 78 % |
| 5 % Perb + 4 % TAC + 5 % 2,2'-Azo-bis-(isobuttersäure-ethylester) | 75 % |

## Patentansprüche

1. Verfahren zum Vernetzen und gegebenenfalls Verschäumen von Homopolymeren von gegebenenfalls kernsubstituiertem Styrol, ausgenommen von p-Methylstyrol-Homopolymeren, von Copolymeren aus Styrol und kernsubstituierten Styrolen oder aus mindestens zwei kernsubstituierten Styrolen, von schlagfestem Polystyrol oder von Mischungen dieser Polymeren mittels Kombinationen aus 0,5 - 15 % mindestens eines Vernetzungsverstärkers, der wenigstens zwei aktive (=polymerisierbare) C-C-Doppel- oder C-C-Dreifachbindungen im Molekül enthält (ausgenommen Bis- und Polymaleinsäureimide) und 0,5-15 % mindestens eines organischen Peroxids (ausgenommen Hydroperoxide, Persäuren und Ketonperoxide) bei Temperaturen über 110°C, gegebenenfalls in Anwesenheit von Verschäumungsmitteln, dadurch *gekennzeichnet*, dass als organische Peroxide solche mit einer 10-Stunden-Halbwertzeit-Temperatur unterhalb 106°C (bestimmt in Benzol) eingesetzt werden.

2. Verfahren nach Anspruch 1, dadurch *gekennzeichnet*, dass als Peroxide aromatische Perester verwendet werden.

3. Verfahren nach Anspruch 1, dadurch *gekennzeichnet*, dass als Peroxide aromatische Diacylperoxide verwendet werden.

4. Verfahren nach Anspruch 1, dadurch *gekennzeichnet*, dass als Peroxide Percarbonatester verwendet werden.

## Claims

1. Process for the cross-linking and possible foaming of homopolymers of styrene, possibly substituted in the ring (other than pmethylstyrene homopolymers), of copolymers composed of styrene and styrenes substituted in the ring or of at least two styrenes substituted in the ring, of impact-resistant polystyrene or mixtures of these polymers, by means of combinations of 0.5 - 15 % of at least one class-linking promoter, which contains at least two active (= polymerizable) carbon-carbon double bonds or carboncarbon triple bonds in the molecule (other than bis- and polymaleic-acid imide) and 0.5 - 15 % of at least one organic peroxide (other than hydroperoxides, peracids and ketone peroxides) at temperatures over 110°C, possibly in the presence of foaming agents, characterized in that as the organic peroxides those with a 10-hour-half-life-temperature of below 106°C (determined in benzene) are used.

2. Process according to claim 1, *characterized* in that aromatic peresters are used as the peroxides.

3. Process according to claim 1, *characterized* in that aromatic diacyl peroxides are used as the peroxides.

4. Process according to claim 1, *characterized* in that percarbonate esters are used as the peroxides.

## Revendications

1. Procédé de réticulation et, le cas échéant, de transformation en mousse d'homopolymères de styrène éventuellement substitué sur le noyau, excepté des homopolymères de p-méthylstyrène, de copolymères de styrène et de styrènes substitués sur le noyau ou d'au moins deux styrènes substitués sur le noyau, de polystyrène résistant au choc ou de mélanges de ces polymères au moyen d'associations formées de 0,5 - 15 % d'au moins un renforçateur de réticulation qui contient, dans sa molécule, au moins deux doubles liaisons carbone-à-carbone ou triples liaisons carbone-à-carbone actives (= polymérisables) (excepté les bis- et polymaléimides) et de 0,5 à 15 % d'au moins un peroxyde organique (excepté des hydroperoxydes, des peracides et des cétoperoxydes) à des températures supérieures à 110°C, éventuellement en présence d'agents moussants, caractérisé en ce qu'on utilise comme peroxydes organiques des peroxydes ayant une température, pour un temps de demi-réaction de 10 heures, inférieure à 106°C (déterminée dans le benzène).

2. Procédé suivant la revendication 1, *caractérisé* en ce qu'on utilise comme peroxydes des peresters aromatiques.

3. Procédé suivant la revendication 1, *caractérisé* en ce qu'on utilise comme peroxydes des peroxydes de diacyle aromatiques.

4. Procédé suivant la revendication 1, *caractérisé* en ce qu'on utilise comme peroxydes des esters du type de percar-bonates.